# EUROPEAN PATENT SPECIFICATION

(11) **EP 0 748 968 B1**
(45) Date of publication and mention of the grant of the patent: **15.09.1999**
(21) Application number: 96109439.8
(22) Date of filing: 12.06.1996
(51) Int. Cl.: F16J 15/32, F16C 33/76

(54) **Sealing assembly, particularly for a rolling bearing**
Abdichteinheit, besonders für Wälzlager
Assemblage d'étanchéité, particulièrement pour palier à roulement

(30) Priority: 13.06.1995 IT TO950488
(43) Date of publication of application: 18.12.1996
(73) Proprietor: SKF INDUSTRIE S.p.A., I-10123 Torino (IT)
(72) Inventor: Vignotto, Angelo, 10100 Torino (IT); Peretti, Pietro Antonio, 10060 Piscina (IT)
(74) Representative: Plebani, Rinaldo

(56) References cited:
- EP-A- 0 301 731
- EP-A- 0 450 793
- EP-A- 0 524 133
- FR-A- 2 527 297
- GB-A- 2 235 956
- US-A- 5 201 529
- US-A- 5 201 533
- US-A- 5 419 642

## Description

The present invention relates to a sealing assembly, particularly for a rolling bearing, to which the following description refers purely by way of example.

To protect the rolling bodies of rolling bearings from external impurities mainly consisting of solid and liquid particles, sealing assemblies are fitted between the inner and outer rings of the bearings, each of which assemblies substantially comprises a first and second shield interference fitted respectively to the inner and outer ring of the bearing.

More specifically, the first shield is substantially rigid, while the second comprises a substantially rigid armature, and an elastomeric sealing element fitted integral with and projecting radially and axially in relation to the armature.

The first shield is fitted inside and frontally in relation to the second so as to cooperate in sliding manner with the elastomeric element and provide for fluidtight sealing.

The elastomeric element normally comprises a first annular sealing lip projecting radially and axially from one end of the armature towards the first shield, and forming a radial seal on a corresponding surface of the first shield; and a second annular sealing lip positioned radially between the first lip and the outer ring, and forming an axial seal on a respective surface of the first shield.

Known assemblies of the aforementioned type present several drawbacks. In particular, any external pollutants or water accumulating persistently on the second annular lip may, in certain cases and certain operating conditions, eventually filter through the axial seal and impair the efficiency of the radial seal and the bearing itself. Secondly, for the axial seal to be located correctly, appropriate assembly tolerances must be provided for between the two shields. And lastly, axial seals are constructively impossible in applications requiring an axially compact sealing assembly, e.g. for insertion inside the gap between the bearing rings of angular speed sensors of ABS brake system control devices.

EP-A-524 133 dicloses a rotary sealing assembly having a profiled rigid annular shield engaged non rotatably on a shaft, an annular housing located radially outwards of the shaft and facing the annular shield, and an elastomeric sealing element interposed between the annular shield and the annular housing. The elastomeric sealing element presents a base portion fitted to the annular housing and two lips projecting radially and axially from the base portion and cooperating with respecitve surfaces of the annular shield for forming two radial seals.

EP-A-301 731 discloses a sealing assembly inserted between a mutually rotating first and second member and comprising a first rigid shield fitted to the first member and a second shield in turn comprising a rigid armature fitted to the second member and an elastomeric sealing element interposed between first and second shield. The elastomeric sealing element presents a base portion fitted to the armature and two lips projecting radially and axially from the base portion and cooperating with respecitve surfaces of the first shield for forming two radial seals.

It is an object of the present invention to provide a sealing assembly, particularly for rolling bearings, designed to overcome the aforementioned drawbacks typically associated with known assemblies.

According to the present invention, there is provided a sealing assembly, particularly for a rolling bearing, as defined in claim 1.

Any external pollutants or water are thus prevented from reaching the first radial seal by virtue of the radial arrangement of the second seal, which forms a much more difficult obstacle to overcome than an axial seal; assembly is also simplified, so that no particular tolerances are required; and, being axially compact, the solution according to the present invention is also suitable for applications in which this is essential, e.g. for insertion inside the gap between the bearing rings of angular speed sensors of ABS brake system control devices.

A non-limiting embodiment of the present invention will be described by way of example with reference to the accompanying drawings, in which:
Figure 1 shows a radial section of a rolling bearing featuring a sealing assembly in accordance with the teachings of the present invention;
Figure 2 shows a larger-scale radial section of a detail of the Figure 1 assembly.

Number 1 in the accompanying drawings indicates a sealing assembly for a rolling bearing 2, and of the type inserted between the outer ring 3 and the inner ring 4 to fluidtight seal the gap 5 defined between the two rings, and so protect against external impurities respective rolling bodies 6 housed inside gap 5 to permit relative rotation of rings 3 and 4.

Sealing assembly 1 comprises a first substantially rigid shield 7 interference fitted to inner ring 4 of bearing 2; and a second shield 8 in turn comprising a substantially rigid armature 11 interference fitted to outer ring 3, and at least one annular elastomeric sealing element 12.

First and second shields 7 and 8 are connected facing each other so that element 12 cooperates simultaneously with a first and second surface 13, 14 of shield 7 to respectively form a first and second annular seal 15, 16.

Armature 11 presents a substantially L-shaped radial section, and comprises a sleeve portion 20 diametrically opposite shield 7 and of such a diameter as to ensure an interference fit with outer ring 3; and a flange portion 21 extending radially inwards of and perpendicularly to portion 20, and presenting a reinforcement 21a.

Element 12 is fitted in projecting manner to armature 11 in any convenient manner, e.g. bonded during curing. More specifically, from outer ring 3 towards inner ring 4, element 12 comprises an annular portion 22 coaxial with and fitted frontally to flange portion 21 of armature 11; a tapered annular portion 23 extending radially towards the axis from portion 22 and from a radially inner edge 24 of portion 21; and an annular sealing lip 25 with a substantially V-shaped radial section, and projecting radially and axially towards shield 7 from portion 23.

The outside diameter of portion 22 is such as to ensure an interference fit with outer ring 3, so that portion 22 cooperates in fluidtight manner and in direct contact with the inner lateral surface of ring 3.

Lip 25 presents an inner annular sliding seal projection 26 facing shield 7, extending radially, and defined externally by two oblique walls 27 joining at a vertex 28 to define the V shape of lip 25.

According to the present invention, element 12 also comprises an annular appendix 30 extending radially towards outer ring 3 from the free end 31 of lip 25.

Appendix 30 is defined by two annular face surfaces 32, 33 sloping towards each other in a radially outward direction, and by an outer lateral surface 34 connecting the outer profiles of surfaces 32, 33.

According to the present invention, face surfaces 32, 33 are inclined differently in relation to said radial direction, and so converge that appendix 30 tapers towards its free end. In the example shown, surface 32, facing portion 22, and surface 33 are respectively inclined 10° and 25° in relation to said radial direction

Appendix 30 also comprises an annular groove 35 formed at the base of annular surface 32, at end 31 of lip 25, and connecting end 31 to surface 32.

First shield 7 presents a substantially S-shaped radial section, and comprises a sleeve portion 36 interference fitted to inner ring 4 of bearing 2; and a flange portion 37 extending radially outwards towards ring 3 from portion 36.

Sleeve portion 36 presents one end 39 facing rolling bodies 6 and defined externally by a conical surface 40 with its taper facing rolling bodies 6; and another end 41 integral with and bent to form flange portion 37.

Flange portion 37 comprises, in radial section, a first portion 44 extending perpendicularly and radially from end 41 of sleeve portion 36; a second portion 45 connected to the free end of portion 44 and extending parallel to sleeve portion 36 and inwards of bearing 2; and a third portion 46 connected to the free end of portion 45 and extending substantially radially towards outer ring 3.

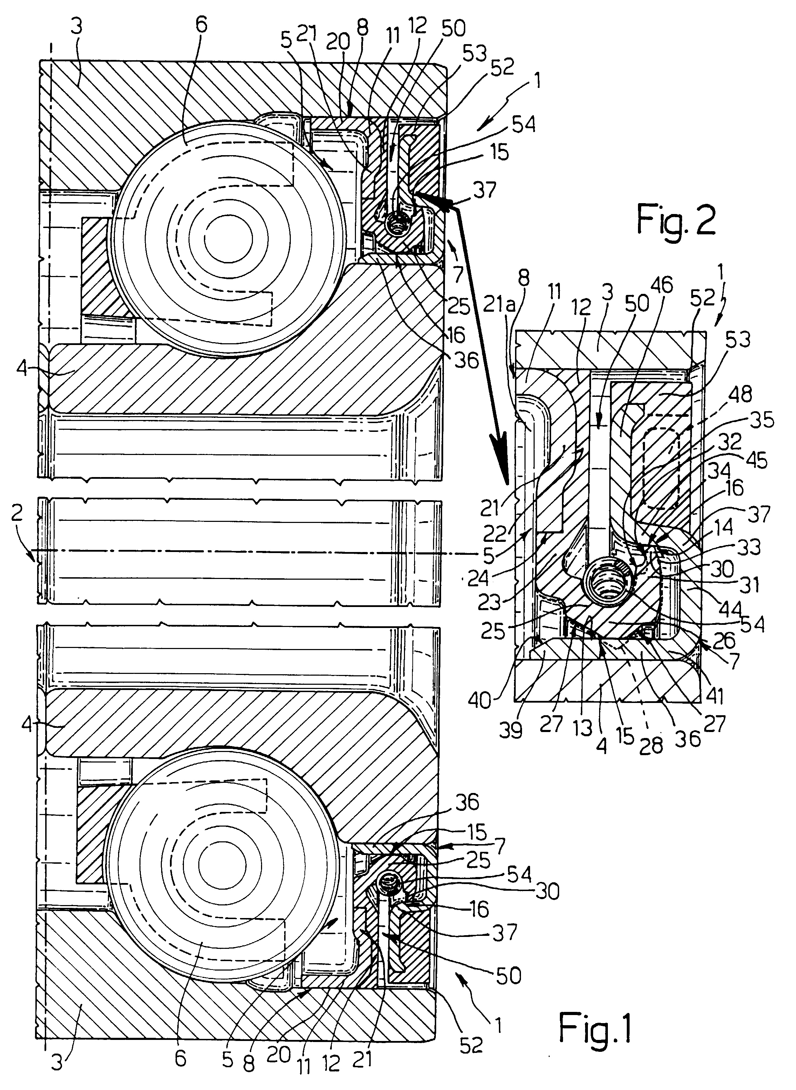

In the non-limiting example shown, portions 45 and 46 of shield 7 support a sensor 48 (shown schematically in Figure 2) outside bearing 2. Needless to say, sensor 48 may be dispensed with, and the portion of shield 7 occupied by sensor 48 may be formed in any other way.

Shield 7 is fitted inside armature 11 of shield 8 so as to cooperate in sliding manner with annular sealing lip 25.

More specifically, sleeve portion 36 of shield 7 supports sealing surface 13, which, in use, cooperates in sliding and interference manner with walls 27 and vertex 28 of annular projection 26 of lip 25, so as to form sliding radial seal 15 between shields 7 and 8.

According to the present invention, portion 45 of flange portion 37, on the other hand, supports sealing surface 14, which is positioned facing and extends a given radial distance from surface 13, and which, in use, cooperates with lateral surface 34 of appendix 30 to form a second radial seal 16 interposed between seal 15 and outer ring 3, and radially more outward than seal 15.

Shields 7 and 8 and portion 23 define an annular chamber 50 housing appendix 30, and which, by virtue of the tapered shape of portion 23, presents a funnel-shaped radial section with its wider end portion adjacent to inner ring 4, and with its concavity facing outwards. Chamber 50 may be partially filled with a fluid lubricating substance, e.g. grease, to enhance the sealing action and lubricate seals 15, 16, and communicates externally via a small annular opening 52 defined by the predetermined clearance between shield 7 and the inner lateral surface of ring 3. Opening 52 is so sized as to define a labyrinth seal substantially fluidtight sealing chamber 50, and, to prevent dangerous interference, is defined, on the shield 7 side, by an elastomeric portion 53 applied to portion 46.

A radial compression spring 54 is fitted in known manner inside annular chamber 50, outside and astride lip 25, to improve the efficiency of seal 15 formed by lip 25.

In actual use, sealing assembly 1 is inserted between rings 3 and 4 of bearing 2 by first inserting shield 8; rigid armature 11 is interference fitted to ring 3 to fasten it mechanically, and elastomeric element 12, also placed contacting ring 3, provides for sealing.

At this point, shield 7 is inserted inside armature 11, so as to cooperate in sliding manner with annular sealing lip 25. More specifically, sleeve portion 36 of shield 7 is interference fitted to ring 4 so as to deform, as it is inserted, lip 25 which is compressed between portion 36 and spring 54 to form radial seal 15 on surface 13 of portion 36. The deformation of lip 25 also provides for shifting appendix 30 radially towards surface 14, so that a minute clearance is left forming a labyrinth seal constituting radial seal 16, or so that appendix 30 contacts surface 14 to form a sliding seal 16. In the latter case, appendix 30 may also flex - assisted by the presence of groove 35 - towards armature 11, the elastic reaction of which provides for improving the efficiency of sliding radial seal 16. In Figure 2, element 12 is shown by the dotted line in the undeformed position, and by the continuous line in the deformed in-service position. The truncated-cone shape of end 39 of sleeve portion 36 simplifies assembly of shield 7 inside shield 8 by acting as a lead-in for deforming lip 25.

The presence of radial seal 16 enables elastomeric element 12 to be kept lubricated with grease inserted inside the annular portion of chamber 50 defined by the portions of shield 7 and element 12 between seals 15 and 16. As compared with numerous known types of sealing assembly, seal 15 is therefore enhanced by the grease being retained better and longer on it, thus ensuring improved sealing efficiency and longer working life by reducing friction. Radial seal 16 thus provides for two functions: preventing external pollutants from contacting radial seal 15, which is functionally the most important; and retaining the grease inside the chamber defined between seals 15 and 16.

During operation of bearing 2, the funnel shape of annular chamber 50 provides for accumulating any external pollutants getting past seal 52 inside the wider end portion of chamber 50 when it is positioned facing upwards, and for subsequently discharging them when the wider end portion is positioned facing downwards.

Clearly, changes may be made to sealing assembly 1 as described and illustrated herein without, however, departing from the scope of the present invention.

In particular, the present invention may obviously be employed for other than bearings. In fact, generally speaking, the sealing assembly according to the present invention may equally be inserted between any two mutually rotating members, e.g. a shaft and seat.

## Claims

1. A sealing assembly (1), particularly for a rolling bearing (2), of the type inserted between a mutually rotating first and second member (4, 3) for fluidtight sealing a gap (5) defined between the same; said sealing assembly (1) comprising a first substantially rigid shield (7) interference fitted to said first member (4); and a second shield (8) in turn comprising a substantially rigid armature (11) interference fitted to said second member (3), and at least one elastomeric sealing element (12); said first and second shields (7, 8) being connected facing each other so that said elastomeric element (12) cooperates at least with a first and second surface (13, 14) of said first shield (7) for respectively forming a first and second radial seal (15, 16); said second seal (16) is formed in a radial position interposed between said first seal (15) and said second member (3) and radially outwards of the first seal (15); characterized in that said elastomeric element (12) comprises a single annular sealing lip (25) with a substantially V-shaped radial section, projecting radially and axially towards said first shield (7) from a radially inner edge (24) of said armature (11), presenting a vertex (28) facing said first member (4) and defining said first and second radial seal (15, 16).

2. A sealing assembly as claimed in Claim 1, characterized in that said armature (11) comprises a sleeve portion (20), and a flange portion (21) extending radially and perpendicularly inwards of said sleeve portion (20); said elastomeric element (12) being fitted frontally to said flange portion (21) on the side facing the first shield (7).

3. A sealing assembly as claimed in Claim 2, characterized in that said elastomeric element (12) comprises an annular appendix (30) extending radially outwards from the free end (31) of said annular sealing lip (25); said appendix (30) being defined by two annular face surfaces (32, 33) sloping in a radially outward direction towards each other, and by an outer lateral surface (34) connecting the outer profiles of said face surfaces (32, 33); said face surfaces (32, 33) sloping differently in relation to said radial direction, and so converging with each other that said appendix (30) tapers towards its free end.

4. A sealing assembly as claimed in Claim 3, characterized in that said first shield (7) presents a substantially S-shaped radial section, and comprises a sleeve portion (36) interference fitted to said first member (4), and a flange portion (37) extending radially outwards from the axially outer end (41) of said sleeve portion (36); the radial section of said flange portion (37) of the first shield (7) being defined by a first portion (44) extending perpendicularly and radially from said sleeve portion (36) of the first shield (7), by a second portion (45) connected to said first portion (44) and extending parallel to the sleeve portion (36) and inwards of said gap (5) between said members (3, 4), and by a third portion (46) connected to said second portion (45) and extending substantially radially towards said second member (3).

5. A sealing assembly as claimed in Claim 4, characterized in that said first surface (13) is defined by the outer lateral surface of said sleeve portion (36) of the first shield (7), and cooperates in sliding manner with said annular lip (25) to form said first radial seal (15).

6. A sealing assembly as claimed in Claim 4 or 5, characterized in that said second surface (14) is supported on said second portion (45) of the first shield (7), is positioned facing said first surface (13), and cooperates with said lateral surface (34) of said appendix (30) to form said second radial seal (16).

7. A sealing assembly as claimed in Claim 6, characterized in that said lateral surface (34) of said appendix (30) cooperates in sliding manner with said second surface (14).

8. A sealing assembly as claimed in Claim 6, characterized in that said lateral surface (34) of said appendix (30) is located a predetermined radial distance from said second surface (14); said second radial seal (16) being a labyrinth seal.

9. A sealing assembly as claimed in one of the foregoing Claims from 3 to 8, characterized in that said first and second shields (7, 8) and said elastomeric element (12) define an annular chamber (50) housing said appendix (30); said chamber (50) presenting a funnel-shaped radial section with its wider section radially innermost.

10. A sealing assembly as claimed in Claim 9 dependent on Claims 4 to 8, characterized in that it comprises a small annular opening (52) defined by said first shield (7) and said second member (3); said opening (52) being so sized as to define a labyrinth seal substantially fluidtight sealing said chamber (50); and said first shield (7) comprising an elastomeric portion (53) applied to said third portion (46) of the first shield (7) and defining said annular opening (52).

## Patentansprüche

1. Dichteinrichtung (1), insbesondere für ein Wälzlager (2), der zwischen zueinander rotierenden ersten und zweiten Elementen (4, 3) eingefügten Art zum fluiddichten Abdichten eines zwischen diesen definierten Spaltes (5), wobei die Dichteinrichtung (1) aus einem ersten im wesentlichen steifen Schild (7), der fest an dem ersten Element (4) sitzt, und einem zweiten Schild (8) besteht, der wiederum eine im wesentlichen steife Verstärkung (11), die fest an dem zweiten Element (3) sitzt, und wenigstens ein elastomeres Dichtelement (12) besitzt, der erste und der zweite Schild (7, 8) einander zugewandt so montiert sind, daß das elastomere Element (12) mit wenigstens einer ersten und einer zweiten Fläche (13, 14) des ersten Schildes (7) zusammenwirkt, um eine erste bzw. eine zweite Radialdichtung (15, 16) zu bilden, und die zweite Dichtung (16) an einer radialen Stelle ausgebildet ist, die zwischen der ersten Dichtung (15) und dem zweiten Element (3) radial außerhalb der ersten Dichtung (15) liegt, **dadurch gekennzeichnet**, daß das elastomere Element (12) aus einer einzigen ringförmigen Dichtlippe (25) mit einem im wesentlichen V-förmigen Radialquerschnitt besteht, der von einem radial inneren Rand (24) der Verstärkung (11) radial und axial in Richtung des ersten Schildes (7) ragt, einen dem ersten Element (4) zugewandten Scheitel (28) aufweist und die erste und die zweite Radialdichtung (15, 16) definiert.

2. Dichtvorrichtung nach Anspruch 1, **dadurch gekennzeichnet**, daß die Verstärkung (11) einen Hülsenbereich (20) und einen Flanschbereich (21) aufweist, der sich von dem Hülsenbereich (20) radial senkrecht nach innen erstreckt, wobei das elastomere Element (12) von vorne auf die dem ersten Schild (7) zugewandte Seite des Flanschbereiches (21) aufgesetzt ist.

3. Dichteinrichtung nach Anspruch 2, **dadurch gekennzeichnet**, daß das elastomere Element (12) einen ringförmigen Fortsatz (30) aufweist, der sich vom freien Ende (31) der ringförmigen Dichtlippe (25) aus radial nach außen erstreckt und durch zwei ringförmige Stirnflächen (32, 33), die in Richtung radial nach außen aufeinander zu abgeschrägt sind, und durch eine äußere Seitenfläche (34) definiert ist, welche die beiden Außenprofile der Stirnflächen (32, 33) verbindet, wobei die Stirnflächen (32, 33) mit Bezug auf die Radialrichtung verschieden abgeschrägt sind und miteinander so konvergieren, daß sich der Fortsatz (30) zu seinem freien Ende hin verjüngt.

4. Dichteinrichtung nach Anspruch 3, **dadurch gekennzeichnet**, daß der erste Schild (7) einen im wesentlichen S-förmigen Radialquerschnitt besitzt und einen Hülsenbereich (36), der fest an dem ersten Element (4) sitzt, und einen Flanschbereich (37) aufweist, der sich von dem axial äußeren Ende (41) des Hülsenbereiches (36) radial nach außen erstreckt, wobei der Radialquerschnitt des Flanschbereiches (37) des ersten Schildes (7) durch einen ersten Abschnitt (44), der sich radial senkrecht von dem Hülsenbereich (36) des ersten Schildes (7) erstreckt, durch einen zweiten Bereich (45), der mit dem ersten Bereich (44) verbunden ist und sich parallel zu dem Hülsenbereich (36) zwischen den Elementen (3, 4) zum Inneren des Spaltes (5) erstreckt, und durch einen dritten Bereich (46) definiert ist, der mit dem zweiten Bereich (45) verbunden ist und sich im wesentlichen radial in Richtung des zweiten Elements (3) erstreckt.

5. Dichteinrichtung nach Anspruch 4, **dadurch gekennzeichnet**, daß die erste Fläche (13) durch die äußere Seitenfläche des Hülsenbereiches (36) des ersten Schildes (7) definiert ist und auf gleitende Art und Weise mit der ringförmigen Lippe (25) zusammenwirkt, um die erste Radialdichtung (15) zu bilden.

6. Dichteinrichtung nach Anspruch 4 oder 5, **dadurch gekennzeichnet**, daß die zweite Fläche (14) an dem zweiten Bereich (45) des ersten Schildes (7) liegt, der ersten Fläche (13) zugewandt angeordnet ist und mit der Seitenfläche (34) des Fortsatzes (30) zusammenwirkt, um die zweite Radialdichtung (16) zu bilden.

7. Dichteinrichtung nach Anspruch 6, **dadurch gekennzeichnet**, daß die Seitenfläche (34) des Fortsatzes (30) auf gleitende Art und Weise mit der zweiten Fläche (14) zusammenwirkt.

8. Dichteinrichtung nach Anspruch 6, **dadurch gekennzeichnet**, daß die Seitenfläche (34) des Fortsatzes (30) in einem vorbestimmten radialen Abstand von der zweiten Fläche (14) angeordnet ist, wobei die zweite Radialdichtung (16) eine Labyrinthdichtung ist.

9. Dichteinrichtung nach einem der Ansprüche 3 bis 8, **dadurch gekennzeichnet**, daß der erste und der zweite Schild (7, 8) und das elastomere Element (12) eine Ringkammer (50) definieren, die den Fortsatz (30) aufnimmt und einen trichterförmigen Radialquerschnitt mit radial innen liegendem weiteren Abschnitt aufweist.

10. Dichteinrichtung nach auf einen der Ansprüche 4 bis 8 rückbezogenen Anspruch 9, **dadurch gekennzeichnet**, daß sie eine kleine ringförmige Öffnung (52) aufweist, die durch den ersten Schild (7) und das zweite Element (3) definiert und so bemessen ist, daß sie eine Labyrinthdichtung bildet, die die Kammer (50) im wesentlichen fluiddicht abdichtet, und der erste Schild (7) ein elastomeres Teil (53) aufweist, das an dem dritten Abschnitt (46) des ersten Schildes (7) angebracht ist und die Ringöffnung (52) definiert.

## Revendications

1. Assemblage d'étanchéité (1), en particulier pour palier à roulement (2), du type inséré entre un premier et un second éléments (4, 3) en rotation mutuelle, pour fermer de manière étanche aux fluides un espace (5) défini entre eux; ledit assemblage d'étanchéité (1) comprenant un premier flasque (7) sensiblement rigide, ajusté serré sur ledit premier élément (4); et un second flasque (8) comprenant à son tour une armature sensiblement rigide (11) ajustée serrée dans ledit second élément (3), et au moins un élément d'étanchéité élastomère (12); lesdits premier et second flasques (7, 8) étant connectés de façon à faire face l'un à l'autre de telle sorte que ledit élément élastomère (12) coopère au moins avec une première et une seconde surfaces (13, 14) dudit premier flasque (7) pour former respectivement un premier et un second joints radiaux (15, 16); ledit second joint (16) est formé dans une position radiale, intercalé entre ledit premier joint (15) et ledit second élément (3), et radialement à l'extérieur du premier joint (15); caractérisé en ce que ledit élément élastomère (12) comprend une seule lèvre d'étanchéité annulaire (25) avec une section radiale sensiblement en forme de V, faisant saillie radialement et axialement vers ledit premier flasque (7) depuis un bord radialement interne (24) de ladite armature (11), présentant un sommet (28) faisant face audit premier élément (4) et définissant lesdits premier et second joints radiaux (15, 16).

2. Assemblage d'étanchéité selon la revendication 1, caractérisé en ce que ladite armature (11) comprend une partie formant manchon (20), et une partie formant bride (21) s'étendant radialement vers l'intérieur de ladite partie formant manchon (20) et perpendiculairement à celle-ci; ledit élément élastomère (12) étant ajusté frontalement à ladite partie formant bride (21) du côté faisant face au premier flasque (7).

3. Assemblage d'étanchéité selon la revendication 2, caractérisé en ce que ledit élément élastomère (12) comprend un appendice annulaire (30) s'étendant radialement vers l'extérieur depuis l'extrémité libre (31) de ladite lèvre d'étanchéité annulaire (25); ledit appendice (30) étant défini par deux surfaces annulaires (32, 33) descendant l'une vers l'autre dans une direction radiale allant vers l'extérieur, et par une surface latérale extérieure (34) reliant les profils extérieurs desdites surfaces (32, 33); lesdites surfaces (32, 33) étant inclinées différemment par rapport à ladite direction radiale, et en convergeant l'une vers l'autre de telle manière que ledit appendice (30) se rétrécit vers son extrémité libre.

4. Assemblage d'étanchéité selon la revendication 3, caractérisé en ce que ledit premier flasque (7) présente une section radiale sensiblement en forme de S, et comprend une partie formant manchon (36) ajustée serrée sur ledit premier élément (4), et une partie formant bride (37) s'étendant radialement vers l'extérieur depuis l'extrémité axialement externe (41) de ladite partie formant manchon (36); la section radiale de ladite partie formant bride (37) du premier flasque (7) étant définie par une première partie (44) s'étendant perpendiculairement et radialement depuis ladite partie formant manchon (36) du premier flasque (7), par une deuxième partie (45) connectée à ladite première partie (44) et s'étendant parallèlement à la partie formant manchon (36) et vers l'intérieur dudit espace (5) entre lesdits éléments (3, 4), et par une troisième partie (46) connectée à ladite deuxième partie (45) et s'étendant sensiblement radialement vers ledit second élément (3).

5. Assemblage d'étanchéité selon la revendication 4, caractérisé en ce que ladite première surface (13) est définie par la surface latérale extérieure de ladite partie formant manchon (36) du premier flasque (7), et coopère à coulissement avec ladite lèvre annulaire (25) pour former ledit premier joint radial (15).

6. Assemblage d'étanchéité selon la revendication 4 ou 5, caractérisé en ce que ladite seconde surface (14) est supportée sur ladite deuxième partie (45) du premier flasque (7), est positionnée face à ladite première surface (13), et coopère avec ladite surface latérale (34) dudit appendice (30) pour former ledit second joint radial (16).

7. Assemblage d'étanchéité selon la revendication 6, caractérisé en ce que ladite surface latérale (34) dudit appendice (30) coopère à coulissement avec ladite seconde surface (14).

8. Assemblage d'étanchéité selon la revendication 6, caractérisé en ce que ladite surface latérale (34) dudit appendice (30) est située à une distance radiale prédéterminée de ladite seconde surface (14); ledit second joint radial (16) étant un joint à labyrinthe.

9. Assemblage d'étanchéité selon l'une quelconque des revendications 3 à 8, caractérisé en ce que lesdits premier et second flasques (7, 8) et ledit élément élastomère (12) définissent une chambre annulaire (50) logeant ledit appendice (30); ladite chambre (50) présentant une section radiale en forme d'entonnoir, sa section la plus large étant radialement la plus à l'intérieur.

10. Assemblage d'étanchéité selon la revendication 9, dépendant des revendications 4 à 8, caractérisé en ce qu'il comprend une petite ouverture annulaire (52) définie par ledit premier flasque (7) et ledit second élément (3); ladite ouverture (52) étant dimensionnée de façon à définir un joint à labyrinthe rendant ladite chambre (50) sensiblement étanche aux fluides; ledit premier flasque (7) comprenant une partie élastomère (53) appliquée à ladite troisième partie (46) du premier flasque (7) et définissant ladite ouverture annulaire (52).
